# EUROPEAN PATENT SPECIFICATION

(11) **EP 3 679 078 B1**
(45) Date of publication and mention of the grant of the patent: **02.06.2021**
(21) Application number: 18759985.7
(22) Date of filing: 05.09.2018
(51) Int. Cl.: C08G 16/02, C08G 14/08, C14C 3/24, C14C 3/20

(54) **A METHOD FOR MANUFACTURING A LIGNIN-MODIFIED POLYPHENOLIC PRODUCT AND ITS USE FOR THE TREATMENT OF LEATHER AND SKIN**
VERFAHREN ZUR HERSTELLUNG EINES LIGNINMODIFIZIERTEN POLYPHENOLISCHEN PRODUKTS UND DESSEN VERWENDUNG ZUR BEHANDLUNG VON LEDER UND HÄUTEN
PROCÉDÉ DE FABRICATION D'UN PRODUIT POLYPHÉNOLIQUE MODIFIÉ PAR DE LA LIGNINE ET SON UTILISATION POUR LE TRAITEMENT DU CUIR ET DE LA PEAU

(30) Priority: 06.09.2017 EP 17189682
(43) Date of publication of application: 15.07.2020
(73) Proprietor: Exploitatiemaatschappij Smit-Vecht B.V., 1382 LK Weesp (NL)
(72) Inventor: MA, Yujie, 1382 LK Weesp (NL); BERENDS, Petra Conny, 1382 LK Weesp (NL)
(74) Representative: Nederlandsch Octrooibureau
(86) International application number: PCT/EP2018/073873
(87) International publication number: WO 2019/048480

(56) References cited:
- US-A- 2 729 534
- US-A- 2 758 990
- US-A1- 2009 326 164
- DATABASE WPI Week 201738 Thomson Scientific, London, GB; AN 2017-30389G XP002776468, & KR 2017 0043850 A (ILSAN TRADING CO LTD) 24 April 2017 (2017-04-24)

## Description

The present invention relates to a method for manufacturing a lignin-modified polyphenolic product comprising the steps according to the preamble of claim 1. The invention also relates to the use of the product for the treatment of leather and hide.

In the leather manufacturing process, raw hides undergo a series of pretreatments that may include soaking, (green) fleshing, unhairing, liming, lime splitting, deliming, bating, degreasing and pickling before the cleaned and altered collagen structure enters the tanning stage. Tanning alters animal collagen, the main component of skin in such a way that renders it resistance to heat and microorganism attack, which can be generally characterized by rises in the hydrothermal stability (shrinkage temperature) of the material.

Various tanning agents transform skin collagen by essentially crosslinking it, which may involve different mechanisms. Nowadays in the still dominating mineral tanning method, metal ions (mostly used being chromium ions) crosslink collagen structure through electrostatic interactions followed by complex formation. Other tanning methods, including vegetable tanning with vegetable extracts (e.g. mimosa, chesnut, tara) and synthetic reactive tanning using aldehydes work differently by either creating crosslinking sites through hydrogen bonding and hydrophobic interactions, or through covalent bond formation on the amine groups of the protein.

Syntans, referring to the range of synthetic polymeric materials capable of tanning, are typically aromatic and contain hydroxyl and sulfonate functionalities. This group of chemicals does not strictly include other resins and polymers (e.g. polyacrylates) .

Typical syntans, being sulfonated condensation aromatic polymers (based on e.g. phenol or naphthalene) are essentially petro-based. Syntans are widely used in leather re-tanning process as part of the post-tanning (wet-end) treatments. Other wet-end processes include neutralization, dyeing and fat liquoring. In this stage of the process leather's organoleptic properties are significantly improved and largely defined. The drawbacks of phenolic syntans include toxicity during manufacturing and emission problems from phenol or formaldehyde monomers during leather's lifetime.

Improvements in syntan's petro-based nature are expected to reduce or eliminate these problems and contribute to a more sustainable leather value chain.

US 2 758 990 A discloses alkalilignin condensates with polyhydroxy benzene which are used as tanning agents, the reaction product of hydroxybenzene compound with sulphuric acid is not mentioned. Lignin is a natural polyphenol derived from biomass that contains a combination of three monomers: p-coumaryl, coniferyl and sinapyl alcohol in p-hydroxylphenyl, guaïacyl and syringyl units, respectively. Ortho positions of the aromatic units are partially free in case of guaïacyl and p-hydroxylphenyl units, making the electrophilic substitution of these sites by aldehyde species possible. Recently, the similarities of lignin's highly complex aromatic structure to phenolic resins generate a wide interest in using it for partial replacement of phenol in the synthesis of these resins. However, there is no syntan available with a higher bio-based content made from phenol substitution by lignins in synthesizing this type of water-soluble phenolic polymer.

The invention aims at providing a method for manufacturing a phenolic syntan with a higher bio-based content and improved emission properties.

The invention further aims at providing usage scenarios of a synthetic tanning agent that improves the hydrothermal stability of leather or skin.

The invention further aims at providing a method for manufacturing a (re)tanning agent that imparts further organoleptic characteristics to leather.

The invention further aims at providing a method for manufacturing a synthetic retanning agent.

In addition, the invention seeks to find a synthetic tanning agent providing the above indicated aims.

The invention also aims at providing a method for tanning or retanning of leather or skin using a (re)tanning agent that is obtainable by means of the method according to the present invention.

Finally, the invention aims at providing a crust, treated with a (re)tanning agent that is obtainable by means of the method according to the present invention as well as finished leather or a leather product such as shoe, car upholstery, furniture upholstery, garment, bag and other accessories based on such a crust.

So as to obtain at least one of the above mentioned aims, the invention provides a method as mentioned in claim 1. This method has the advantage that an agent is manufactured that has at least one of the above advantages.

The invention therefore relates to a method for manufacturing a lignin-modified polyphenolic product, comprising the steps of:
[1] reacting a hydroxybenzene compound, optionally in a mixture comprising lignin, with sulphuric acid and [2] diluting the reaction mixture with water;
   wherein the method further comprises either:
[3a] adding urea to the reaction mixture obtained in step [2], [4a] if the mixture of step [1] does not comprise lignin, adding water insoluble lignin to the mixture obtained in step [3a], and [5a] performing a condensation reaction by adding formaldehyde or glyoxylic acid or glyoxal or a combination of different aldehydes as an aldehyde to obtain a water soluble hydroxybenzene-lignin-aldehyde polymer-based product,
   or
[4b] if the mixture of step [1] does not comprise lignin, adding water insoluble lignin to the reaction mixture obtained in step [2], and [5b] performing a condensation reaction by adding glyoxylic acid or glyoxal or a combination of glyoxylic acid and glyoxal as aldehyde to obtain a water soluble hydroxybenzene-lignin-aldehyde polymer-based product.
   According to another embodiment, the invention also relates to a method for manufacturing a lignin-modified polyphenolic product, comprising the steps of:
[1] reacting a hydroxybenzene compound with sulphuric acid and [2] diluting the reaction mixture with water; wherein the method further comprises either:
[3a] adding urea to the reaction mixture obtained in step [2], [4a] adding water insoluble lignin to the mixture obtained in step [3a], and [5a] performing a condensation reaction by adding formaldehyde, as an aldehyde to obtain a water soluble hydroxybenzene-lignin-aldehyde polymer-based product,
   or
[4b] adding water insoluble lignin to the reaction mixture obtained in step [2], and [5b] performing a condensation reaction by adding glyoxylic acid as aldehyde to obtain a water soluble hydroxybenzene-lignin-aldehyde polymer-based product.

It is also shown that the retanning agent obtained according to the method of the present invention can be used advantageously in tanning processes as well.

The obtained polyphenolic product belongs to the group of phenolic (re)tanning agents that increases the hydrothermal stability of raw hides or pre-tanned hides. In addition, it also renders good organoleptic properties such as fullness and softness to the obtained leather.

In the present invention, lignin (for partial replacement of phenol) content can reach up to 60% based on the total weight of phenol and lignin. Previously, similar polymer-based products could only be made with 100% petro-based hydrobenzene compounds.

The lignin used in the present invention has not been modified at the available functional groups including the phenolic hydroxyls.

The degree of substitution of phenol with lignin depends on the type of lignin used, likely related to the origin/source of the lignin as well as its functional groups including phenolic hydroxyl content.

It is preferred in the present invention that after step [5a] or step [5b] the reaction mixture is diluted and the pH is adjusted to a value of 2.5 - 5. Such an aqueous solution can be applied in a leather or skin treatment process.

The condensation reaction of step [5a] or step [5b] is performed under acidic circumstances, preferably at a pH of below 4, preferably below 3.

It is preferred that the hydroxybenzene is chosen from phenol or cresol.

According to the present invention, the kind of lignin is not directly determining the results obtained in the leather treatment process, but an lignin that is insoluble at neutral to acidic conditions should be used in the present invention. As a consequence, it is preferred that the lignin is chosen from unsubstituted lignin or a lignin derivative, for example soda lignin (Green Value protobind 1000/4000), kraft lignin (Suzano NewProd-FP 101/102, Indulin AT, Lineo by Stora Enzo) and organosolv lignin (Ligno lignin) .

A simple and efficient reaction is obtained when the lignin is added in powder form in step [1], [4a] or step [4b]. The lignins chosen generally remain insoluble until after the initiation of step [5a] or step [5b].

According to a further preferred embodiment of the present invention, the reaction mixture obtained in step {5a] or [5b] is diluted with water until the solution has a solid content in the range of 35-50% w-w, preferably in the range of 38-45% w-w.

In step [1], the hydroxybenzene compound is melted and sulphuric acid or its mixture with a lignin is dosed into the melted hydroxybenzene compound. The following reaction conditions are applied when phenol is used as the hydroxybenzene compound. Melting preferably is performed at a temperature of about 40 °C. The reaction is then preferably performed at a temperature of about 100 °C by raising the temperature after dosing the sulphuric acid into the melted hydroxybenzene compound.

According to a further embodiment, the invention relates to the use of a water soluble hydroxybenzene-lignin-aldehyde polyphenolic product obtainable according to the method of the present invention in skin or leather treatment, preferably in a tanning or a retanning treatment.

According to a still further embodiment, the present invention relates to a water soluble hydroxybenzene-lignin-aldehyde polyphenolic product obtainable according to the method of the present invention, the final product having a free phenol content when produced according to the formaldehyde route of less than 20 ppm and having a free phenol content when produced according to the glyoxylic acid route of less than 20 ppm. The very low free phenol content is advantageous in reducing leather's overall emission problems.

According to the present invention, an additional advantage is obtained especially when applying aldehydes (glyoxylic acid, glyoxal or their combinations) other than formaldehyde by following step [5b]. Leather products treated thus show greatly reduced formaldehyde emission.

A still further embodiment of the present invention relates to a method for treating a skin or leather comprising the step of treating said skin or said leather with a water soluble hydroxybenzene-lignin-aldehyde polyphenolic product obtainable according to the method of the present invention for at least one of raising its shrinkage temperature, improving its softness, improving its fullness, improving its grain tightness.

Finally, the invention relates to a skin or leather, treated with a water soluble hydroxybenzene-lignin-aldehyde polyphenolic product obtainable according to the method of the present invention.

Hereafter, the invention will be further described by means of examples. The examples relate to methods for manufacturing the water soluble hydroxybenzene-lignin-aldehyde polyphenolic product as well as to examples of treating skin and leather.

### GENERAL PRODUCT PROCEDURE

### Example 1: phenol sulfonation, urea added before lignin, aldehyde

0.77-0.86 mole phenol is first melted in a three-neck round bottom flask at 50 °C. With gentle stirring, 0.45-0.91 mole sulfuric acid 96% is dosed slowly into the flask before the temperature is raised to 100 °C. The reaction is continued at this temperature for 1hr before cooling down to 95 °C. The above reaction mixture is diluted to a 70-75% solution with water. When the temperature reaches 80°C, 0.1-0.9 mole urea is added.

After the fully dissolution of the urea 28-56 g of lignin powder (this can be any type of lignin from the above list) is slowly added and the temperature lowered from 70 to 65 °C. Next, the condensation with a total of 1-1.6 mole of formaldehyde 37% or glyoxylic acid 50% or glyoxyal 40% or a combination of them is done by batch dosing steps at 65°C followed by stirring for at least an additional 30 min at 65-71°C in the case of formaldehyde and 1-4 hrs at 90-100 °C in the case of other aldehydes or combinations. The mixture is first diluted with water, cooled down to 50 °C and finally pH adjusted by dosing sodium hydroxide 50% and (optionally) dicarboxylic acid to reach a pH of ∼4. The product concentration is adjusted with water to reach a solid content of ∼40%.

The final product is a brown clear liquid with solid content of 38-45%, 10% pH of 3.0-4.5, acid values of 48-65 mg KOH/g. The free-phenol of the product is <20 ppm.

### Example 2: phenol sulfonation, no urea, lignin addition after sulfonation, using aldehydes other than formaldehyde

0.77-0.86 mole phenol is first melted in a three-neck round bottom flask at 50 °C. With gentle stirring, 0.45-0.91 mole sulfuric acid 96% is dosed slowly into the flask before the temperature is raised to 100 °C. The reaction is continued at this temperature for 1 hr before cooling down to 95 °C. The above reaction mixture is diluted to a 70-75% solution with water.

Afterwards 28-56 g of lignin powder (this can be any type of lignin from the above list) is slowly added at 80 °C. Next, the condensation with a total of 0.69-0.96 mole glyoxylic acid 50%, glyoxyal 40%or a combination of glyoxylic acid 50% and glyoxyal is done by batch dosing steps at 80-100 °C followed by stirring for another 1-4 hours at 90-100 °C. The mixture is first diluted with water, cooled down to 50 °C and finally pH adjusted by dosing sodium hydroxide 50% to reach a pH of 3-4. The product concentration is adjusted with water to reach a solid content of ∼40%.

The final product is a brown clear liquid with solid content of 38-45%, 10% pH of 3.0-4.5, acid values of 48-65 mg KOH/g. The free-phenol of the product is <20 ppm (except when glyoxal alone is used as the type of aldehyde in the reaction).

### Example 3: first mix phenol and lignin, then sulfonation, + urea and formaldehyde

0.77-0.86 mole phenol is first melted in a three-neck round bottom flask at 50 °C before 28-60 g lignin is added to the melted phenol. With gentle stirring, 1 mole sulfuric acid 96% is dosed slowly into the flask before the temperature is raised to 100 °C. The reaction is continued at this temperature for 1hr before cooling down to 95 °C. The above reaction mixture is diluted to a 70-75% solution with water. When the temperature reaches 80°C, 0.9 mole urea is added. Next, the condensation with a total of 0.9-1.7 mole of formaldehyde 37% is done by batch dosing steps at 65 °C followed by stirring for at least an additional 30 min at 65-71 °C. After the reaction the mixture is first diluted with water, cooled down to 50 °C and finally pH adjusted by dosing sodium hydroxide 50% and dicarboxylic acid to reach a pH of ∼4. The product concentration is adjusted with water to reach a solid content of ∼40%. The final product is a brown clear liquid with solid content of 38-45%, 10% pH of 3.0-4.5, acid values of 48-65 mg KOH/g. The free-phenol of the product is <20 ppm.

### Example 4: first mix phenol and lignin, then sulfonation, no urea, + glyoxylic acid or a combination of glyoxylic acid and glyoxal

0.39-0.86 mole phenol is first melted in a three-neck round bottom flask at 50 °C before 28-60 g lignin is added to the melted phenol. With gentle stirring, 0.45-0.91 mole sulfuric acid 96% is dosed slowly into the flask before the temperature is raised to 100 °C. The reaction is continued at this temperature for 1hr before cooling down to 95 °C. The above reaction mixture is diluted to a 70-75% solution with water. Next, the condensation with a total of 0.58-0.96 mole of glyoxylic acid 50% or a combination of glyoxylic acid 50% and glyoxal 40% is done by batch dosing steps at 65°C optionally followed by stirring for at least an additional 30 min at 60°C. After reaction at 60-100 °C for up to 2 hrs, the final reaction mixture is first diluted with water, cooled down to 50 °C and finally pH adjusted by dosing sodium hydroxide 50% to reach a pH of ∼4. The product concentration is adjusted with water to reach a solid content of ∼40%.

The final product is a brown clear liquid with solid content of 38-45%, 10% pH of 3.0-4.5, acid values of 48-65 mg KOH/g. The free-phenol of the product is <20 ppm

### LEATHER TANNING/RETANNING TRIALS

### Example 5: Increasing the shrinkage temperature of wet white leather

Wet white leather pre-tanned with glutaraldehyde that presents a typical shrinkage temperature of 68-70 °C is treated with the lignin-phenol-urea-formaldehyde or lignin- phenol-glyoxylic acid condensate product prepared by the methods described in the above examples 1-4 with an amount between 10-30% based on shaved weight. An increase of the shrinkage temperature (Ts) of the obtained leather by up to 12 °C is measured. Within this range, the higher the amount of the polymer used, the higher the shrinkage temperature of the final leather will be.

### Example 6: Used as (co-) tanning agent for the (pre) tanning of hide

Pickled pelt is treated with the lignin-phenol-glyoxylic acid condensate product prepared by the methods described in example 2 with an amount between 50-70% based on pelt weight in combination with a naphthalene sulfonate polymer containing synthetic tanning agents with an amount of 3% based on pelt weight. The measured shrinkage temperature of the final leather is 75 °C.

### Example 7: Used as retanning agents for chrome-tanned shoe upper leather

Chrome-tanned wet blue leather is washed and neutralized to pH 4.5 before the lignin-modified polymeric product is applied at 8-24% (based on shaved weight) together with a polyacrylic acid polymer and a dyestuff of choice at 45 °C. After fixation using formic acid and washing, the process is continued with the application of a polyacrylic acid polymer (e.g. Syntan RS 540 from Smit en Zoon) together with fat liquoring agents consisting of synthetic and sulphated natural oil (e.g. POLYOL NFO and/or SYNTHOL SL335 from Smit en Zoon) at 45°C, finished with cold wash, drying and staking. The resulted leather presents excellent fullness and grain tightness.

### Example 8: Used as retanning agents for chrome-free shoe upper leather

Chrome-free leather is treated with a float containing up to 30% (based on shaved weight) of the lignin-modified polymeric product, a phenol sulphonic acid condensate product containing neutralizing agent (e.g. SYNTAN NN555 from Smit en Zoon), some traditional phenol sulphonic acid condensate retanning agents (e.g. SYNTAN SF156 from Smit en Zoon), emulsified natural phospholipids (e.g. POLYOL HS818 from Smit en Zoon), emulsified synthetic oils (e.g. SYNTHOL WP from Smit en Zoon), a formaldehyde-free dicyandiamide resin based retanning agent (e.g. SAFETAN DD001 from Smit en Zoon) and dyestuff. After fixation with formic acid and washing, the process is continued with a float containing emulsified natural phospholipids (e.g. POLYOL HS818 from Smit en Zoon), emulsified synthetic oils (e.g. SYNTHOL WP from Smit en Zoon), natural and synthetic phosphate fatty polymer (e.g. SYNTHOL FL327 from Smit en Zoon), and a zeolite based retanning agent (e.g. SYNTAN ZLR100 from Smit en Zoon) at 45°C, finished with cold wash, drying and staking. The resulted leather presents extremely smooth grains and a nice and soft touch.

### GPC DATA ON LIGNIN AND LIGNIN-PHENOL-UREA-FORMALDEHYDE POLYMER

Alkaline GPC experimental details: lignin and lignin-phenol-urea-formaldehyde polyphenolic product samples are dissolved in 0.5 M NaOH before injected into a column with ethylene glycol-methacrylate copolymer TSK gel and eluted with the same solvent. Standards for calibration of the molar mass distribution are sodium-polystyrene sulfonates with Mw range of 891 to 976,000 dalton.

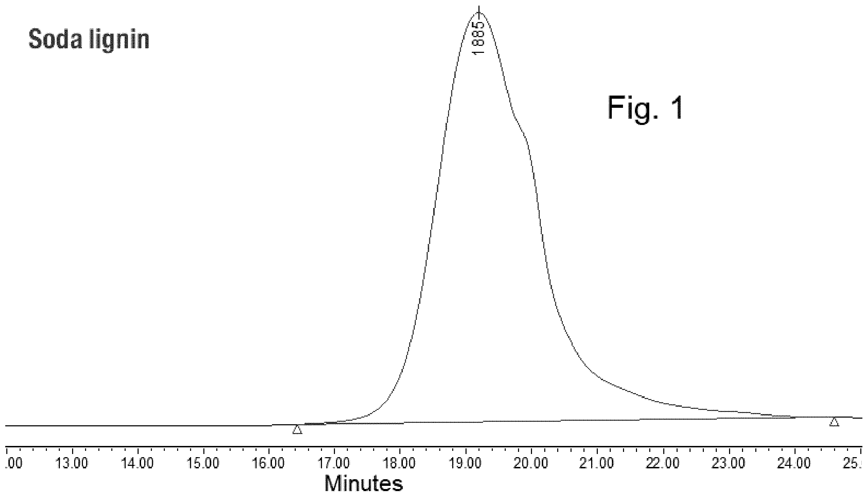

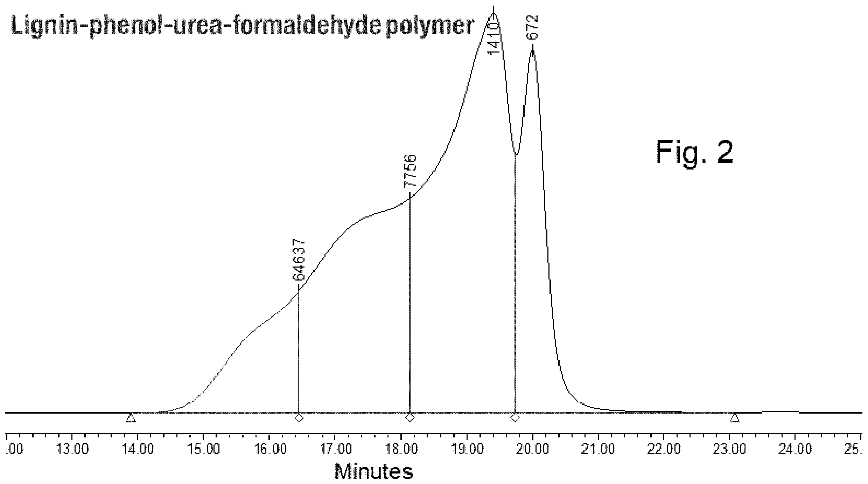

Enclosed are the GPC data of a soda lignin sample (Fig. 1, GreenValue Protobind 1000) and a sample of lignin-phenol-urea-formaldehyde polymer-based product based on this soda lignin sample prepared following the procedure described in Example 1 (Fig. 2). The appearance of multiple peaks with shorter retention times indicates the formation of higher Mw species after the condensation reaction. The Mw is not calculated in this case due to the presence of multiple peaks in the GPC chromatograph.

### GPC ANALYSIS OF REPRESENTATIVE SAMPLES OF EXAMPLES 1-4

Aqueous GPC is further used to study and compare the molecular weight of different polyphenolic product based on different chemical processes using 50mM Na-phosphate + 0,1 M NaCl (pH 7,2) as eluent. Typically a 10 µl ∼1mg/mL sample is injected in a GPC system with a PSS MCX column combination medium and the elution curve is recorded using a UV-detector at 280 nm. Standards used for calibration of the molar mass distribution are sodium-polystyrene sulfonates with a molecular weight (Mp) range of 891to 976,000 dalton.

In the following table GPC data on representative samples of the above described EXAMPLES 1-4 are shown.

**Table 1. Molecular weight (Mw, Mn, Mz) in Dalton and polydispersity index (PDI: Mw/Mn) data on representative samples of Examples 1-4.**

| **Sample** | **Mn** | **Mw** | **Mz** | **Mw/Mn** |
|---|---|---|---|---|
| Example 1 | 249 | 11388 | 38989 | 45.7 |
| Example 2 | 270 | 10072 | 34548 | 37.3 |
| Example 3 | 312 | 16246 | 60087 | 52.1 |
| Example 4 | 274 | 5990 | 17875 | 21.8 |

### POSSIBLE STRUCTURE COMPONENTS OF THE OBTAINED LIGNIN-PHENOL-UREA-FORMALDEHYDE POLYPHENOLIC PRODUCT

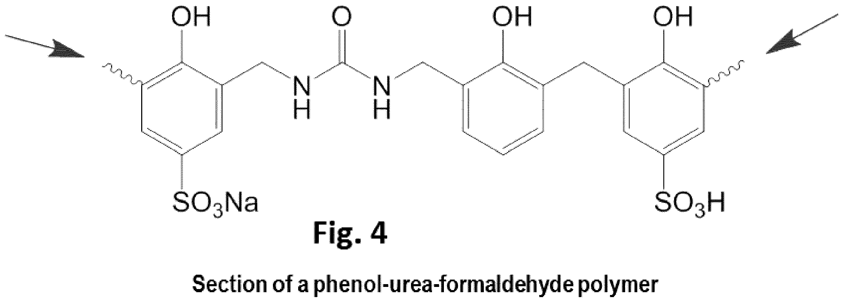

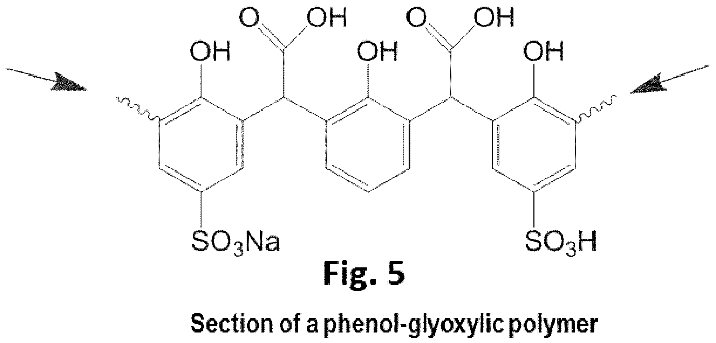

Since there is not one unique and well-defined lignin structure, the following figure shows only examples of possible structure components of the polymer made. The present invention therefore is in no way limited to the shown structure, that only serves as a basis. Please note that only an example of a section of the lignin (in this case soft wood lignin, Fig. 4) and the phenol-urea-formaldehyde structure (Fig. 4) or phenol-glyoxylic acid polymer (Fig. 5) structure are presented.

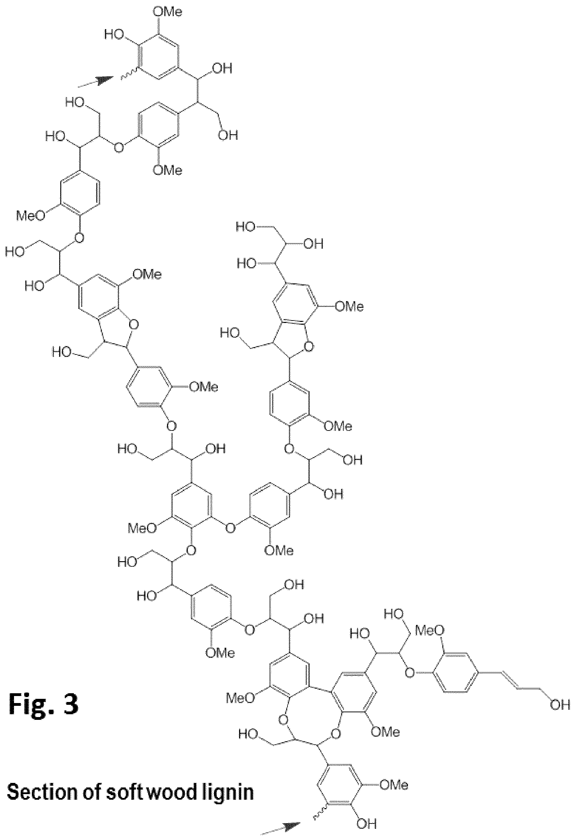

Red arrows in Fig. 3, Fig. 4 and Fig. 5 indicate where the linkages to lignin or other structural components are expected.

The invention is not limited to the embodiments as mentioned above and as shown in the drawings. The invention is limited by the claims only.

## Claims

1. A method for manufacturing a lignin-modified polyphenolic product to be used in the treatment of leather or skin, comprising the steps of:
[1] reacting a hydroxybenzene compound, optionally in a mixture comprising lignin, with sulphuric acid and
[2] diluting the reaction mixture with water;
wherein the method further comprises:
either:
[3a] adding urea to the reaction mixture obtained in step [2],
[4a] if the mixture of step [1] does not comprise lignin, adding water insoluble lignin to the mixture obtained in step [3a], and
[5a] performing a condensation reaction by adding formaldehyde or glyoxylic acid or glyoxal or a combination of different aldehydes as aldehyde to obtain a water soluble hydroxybenzene-lignin-aldehyde polymer-based product,
or:
[4b] if the mixture of step [1] does not comprise lignin, adding water insoluble lignin to the reaction mixture obtained in step [2], and
[5b] performing a condensation reaction by adding glyoxylic acid or glyoxal or a combination of glyoxylic acid and glyoxal as aldehyde to obtain a water soluble hydroxybenzene-lignin-aldehyde polymer-based product.

2. A method for manufacturing a lignin-modified polyphenolic product to be used in the treatment of leather or skin, comprising the steps of:
[1] reacting a hydroxybenzene compound with sulphuric acid and
[2] diluting the reaction mixture with water;
wherein the method further comprises either:
[3a] adding urea to the reaction mixture obtained in step [2],
[4a] adding water insoluble lignin to the mixture obtained in step [3a], and
[5a] performing a condensation reaction by adding formaldehyde as aldehyde to obtain a water soluble hydroxybenzene-lignin-aldehyde polymer-based product,
or
[4b] adding water insoluble lignin to the reaction mixture ob-5 tained in step [2], and
[5b] performing a condensation reaction by adding glyoxylic acid as aldehyde to obtain a water soluble hydroxybenzene-lignin-aldehyde polymer-based product.

3. A method according to claim 1 or 2, wherein after step [5a] or step [5b] the reaction mixture is diluted and pH is adjusted to a pH in the range of 2.5 - 5.

4. A method according to claim 1 or 2, wherein the condensation 15reaction of step [5a] or step [5b] is performed under acidic circumstances, preferably at a pH of below 4, preferably below 3.

5. A method according to claim 1 or 2, wherein the hydroxybenzene is chosen from phenol or cresol.

6. A method according to claim 1 or 2, wherein the lignin is chosen from unsubstituted lignin or a lignin derivative, for example soda lignin, kraft lignin and organosolv lignin.

7. A method according to claim 1 or 2, wherein the lignin is added in powder form in step [1] or step [4a] or step [4b].

8. A method according to claim 3, wherein after diluting with water the solution has a solid content in the range of from 35-50% 30w-w.

9. A method according to claim 1 or 2, wherein in step [1] the hydroxybenzene compound is melted and sulphuric acid is dosed into the melted hydroxybenzene compound or its mixture with lignin. 35

10. Use of a water soluble hydroxybenzene-lignin-aldehyde polymer obtainable according to any of claims 1 to 9 in skin or leather treatment, preferably in a tanning or a retanning treatment.

11. A water soluble hydroxybenzene-lignin-aldehyde polyphenolic product obtainable according to any of claims 1 to 9 having a free 5phenol content of less than 20 ppm.

12. A method for treating a skin or leather comprising the step of contacting said skin or said leather with a product based on a water soluble hydroxybenzene-lignin-aldehyde polyphenolic product 10obtainable according to any of claims 1 to 9 for at least one of raising its shrinkage temperature, improving its softness, improving its fullness, improving its grain tightness.

13. A skin or leather, treated with a water soluble hydroxyben-15zene-lignin-aldehyde polyphenolic product obtainable according to any of claims 1 to 9.

14. A product, such as shoe, car upholstery, furniture upholstery, garment, bag and other accessories comprising leather according to 20claim 13 or leather treated according to the method of claim 12.

## Patentansprüche

1. Verfahren zum Herstellen eines Lignin-modifizierten polyphenolischen Produkts zur Verwendung in der Behandlung von Leder oder Haut, umfassend die Schritte:
[1] des Reagierens einer Hydroxybenzolverbindung, optional in einer Mischung, die Lignin umfasst, mit Schwefelsäure und
[2] des Verdünnens der Reaktionsmischung mit Wasser;
wobei das Verfahren ferner umfasst:
entweder:
[3a] das Zugeben von Harnstoff zur in Schritt [2] erhaltenen Reaktionsmischung,
[4a] das Zugeben von wasserunlöslichem Lignin zur in Schritt [3a] erhaltenen Mischung, wenn die Mischung aus Schritt [1] kein Lignin umfasst, und
[5a] das Durchführen einer Kondensationsreaktion durch Zugeben von Formaldehyd oder Glyoxylsäure oder Glyoxal oder einer Kombination von unterschiedlichen Aldehyden als Aldehyd, um ein wasserlösliches Hydroxybenzol-Lignin-Aldehyd-Polymer-basiertes Produkt zu erhalten, oder:
[4b] das Zugeben von wasserunlöslichem Lignin zur in Schritt [2] erhaltenen Reaktionsmischung, wenn die Mischung aus Schritt [1] kein Lignin umfasst, und
[5b] das Durchführen einer Kondensationsreaktion durch Zugeben von Glyoxylsäure oder Glyoxal oder einer Kombination von Glyoxylsäure und Glyoxal als Aldehyd, um ein wasserlösliches Hydroxybenzol-Lignin-Aldehyd-Polymer-basiertes Produkt zu erhalten.

2. Verfahren zum Herstellen eines Lignin-modifizierten polyphenolischen Produkts zur Verwendung in der Behandlung von Leder oder Haut, umfassend die Schritte:
[1] des Reagierens einer Hydroxybenzolverbindung mit Schwefelsäure und
[2] des Verdünnens der Reaktionsmischung mit Wasser;
wobei das Verfahren ferner umfasst entweder:
[3a] das Zugeben von Harnstoff zur in Schritt [2] erhaltenen Reaktionsmischung,
[4a] das Zugeben von wasserunlöslichem Lignin zur in Schritt [3a] erhaltenen Mischung, und
[5a] das Durchführen einer Kondensationsreaktion durch Zugeben von Formaldehyd als Aldehyd, um ein wasserlösliches Hydroxybenzol-Lignin-Aldehyd-Polymer-basiertes Produkt zu erhalten,
oder
[4b] das Zugeben von wasserunlöslichem Lignin zur in Schritt [2] erhaltenen Reaktionsmischung, und
[5b] das Durchführen einer Kondensationsreaktion durch Zugeben von Glyoxylsäure als Aldehyd, um ein wasserlösliches Hydroxybenzol-Lignin-Aldehyd-Polymer-basiertes Produkt zu erhalten.

3. Verfahren gemäß Anspruch 1 oder 2, wobei nach Schritt [5a] oder Schritt [5b] die Reaktionsmischung verdünnt wird und der pH-Wert auf einen pH-Wert im Bereich von 2,5 - 5 eingestellt wird.

4. Verfahren gemäß Anspruch 1 oder 2, wobei die Kondensationsreaktion aus Schritt [5a] oder Schritt [5b] unter sauren Bedingungen durchgeführt wird, bevorzugt bei einem pH-Wert von unter 4, bevorzugt unter 3.

5. Verfahren gemäß Anspruch 1 oder 2, wobei das Hydroxybenzol ausgewählt wird aus Phenol oder Kresol.

6. Verfahren gemäß Anspruch 1 oder 2, wobei das Lignin ausgewählt wird aus unsubstituiertem Lignin oder einem Ligninderivat, beispielsweise Soda-Lignin, Kraft-Lignin und Organosolv-Lignin.

7. Verfahren gemäß Anspruch 1 oder 2, wobei das Lignin in Pulverform in Schritt [1] oder Schritt [4a] oder Schritt [4b] zugegeben wird.

8. Verfahren gemäß Anspruch 3, wobei die Lösung nach Verdünnen mit Wasser einen Feststoffgehalt im Bereich von 35-50%w-w aufweist.

9. Verfahren gemäß Anspruch 1 oder 2, wobei in Schritt [1] die Hydroxybenzolverbindung geschmolzen wird und Schwefelsäure in die geschmolzene Hydroxybenzolverbindung oder ihre Mischung mit Lignin dosiert wird.

10. Verwendung eines wasserlöslichen Hydroxybenzol-Lignin-Aldehyd-Polymers erhältlich gemäß einem der Ansprüche 1 bis 9 in der Haut- oder Lederbehandlung, bevorzugt in einer Gerbe- oder Nachgerbebehandlung.

11. Wasserlösliches Hydroxybenzol-Lignin-Aldehyd polyphenolisches Produkt erhältlich gemäß einem der Ansprüche 1 bis 9 mit einem freien Phenolgehalt von weniger als 20 ppm.

12. Verfahren zum Behandeln einer(s) Haut oder Leders umfassend den Schritt des in Kontakt Bringens besagter Haut oder besagten Leders mit einem Produkt basierend auf einem wasserlöslichen Hydroxybenzol-Lignin-Aldehyd polyphenolischen Produkt erhältlich gemäß einem der Ansprüche 1 bis 9 für zumindest eines aus Erhöhen seiner Schrumpftemperatur, Verbessern seiner Weichheit, Verbessern seiner Fülle, Verbessern seiner Korndichtigkeit.

13. Haut oder Leder, behandelt mit einem wasserlöslichen Hydroxybenzol-Lignin-Aldehyd polyphenolischen Produkt erhältlich gemäß einem der Ansprüche 1 bis 9.

14. Produkt, wie etwa Schuh, Autopolsterung, Möbelpolsterung, Kleidungsstück, Tasche und andere Accessoire, das Leder gemäß Anspruch 13 oder Leder, das gemäß dem Verfahren aus Anspruch 12 behandelt ist, umfasst.

## Revendications

1. Procédé de fabrication d'un produit polyphénolique modifié par de la lignine, destiné à être utilisé dans le traitement du cuir ou de la peau, comprenant les étapes consistant à :
[1] faire réagir un composé d'hydroxybenzène, facultativement dans un mélange comprenant de la lignine, avec de l'acide sulfurique ; et
[2] diluer le mélange réactionnel avec de l'eau ;
le procédé comprenant en outre :
soit :
[3a] ajouter de l'urée au mélange réactionnel obtenu à l'étape [2] ;
[4a] si le mélange de l'étape [1] ne comprend pas de lignine, ajouter de la lignine insoluble dans l'eau au mélange obtenu à l'étape [3a] ; et
[5a] effectuer une réaction de condensation par addition de formaldéhyde ou d'acide glyoxylique ou de glyoxal ou d'une combinaison de différents aldéhydes en tant qu'aldéhyde pour obtenir un produit à base de polymère hydroxybenzène-lignine-aldéhyde soluble dans l'eau,
soit :
[4b] si le mélange de l'étape [1] ne comprend pas de lignine, ajouter de la lignine insoluble dans l'eau au mélange réactionnel obtenu à l'étape [2] ; et
[5b] effectuer une réaction de condensation par addition d'acide glyoxylique ou de glyoxal ou d'une combinaison d'acide glyoxylique et de glyoxal en tant qu'aldéhyde pour obtenir un produit à base de polymère hydroxybenzène-lignine-aldéhyde soluble dans l'eau.

2. Procédé de fabrication d'un produit polyphénolique modifié par de la lignine, destiné à être utilisé dans le traitement du cuir ou de la peau, comprenant les étapes consistant à :
[1] faire réagir un composé d'hydroxybenzène avec de l'acide sulfurique ; et
[2] diluer le mélange réactionnel avec de l'eau ;
le procédé comprenant en outre soit :
[3a] ajouter de l'urée au mélange réactionnel obtenu à l'étape [2] ;
[4a] ajouter de la lignine insoluble dans l'eau au mélange obtenu à l'étape [3a] ; et
[5a] effectuer une réaction de condensation par addition de formaldéhyde en tant qu'aldéhyde pour obtenir un produit à base de polymère hydroxybenzène-lignine-aldéhyde soluble dans l'eau,
soit
[4b] ajouter de la lignine insoluble dans l'eau au mélange réactionnel obtenu à l'étape [2] ; et
[5b] effectuer une réaction de condensation par addition d'acide glyoxylique en tant qu'aldéhyde pour obtenir un produit à base de polymère hydroxybenzène-lignine-aldéhyde soluble dans l'eau.

3. Procédé selon l'une des revendications 1 et 2, dans lequel, après l'étape [5a] ou l'étape [5b], le mélange réactionnel est dilué et le pH est ajusté à un pH dans la plage de 2,5 - 5.

4. Procédé selon l'une des revendications 1 et 2, dans lequel la réaction de condensation de l'étape [5a] ou de l'étape [5b] est effectuée dans des conditions acides, de préférence à un pH inférieur à 4, de préférence inférieur à 3.

5. Procédé selon l'une des revendications 1 et 2, dans lequel l'hydroxybenzène est choisi parmi le phénol ou le crésol.

6. Procédé selon l'une des revendications 1 et 2, dans lequel la lignine est choisie parmi de la lignine non substituée ou un dérivé de lignine, par exemple la lignine sodique, la lignine kraft et la lignine organosolv.

7. Procédé selon l'une des revendications 1 et 2, dans lequel la lignine est ajoutée sous forme pulvérulente dans l'étape [1] ou dans l'étape [4a] ou dans l'étape [4b].

8. Procédé selon la revendication 3, dans lequel, après dilution avec de l'eau, la solution a une teneur en matières solides dans la plage de 35 à 50 % p/p.

9. Procédé selon l'une des revendications 1 et 2, dans lequel, dans l'étape [1], le composé d'hydroxybenzène est fondu et l'acide sulfurique est dosé dans le composé d'hydroxybenzène fondu ou son mélange avec de la lignine.

10. Utilisation d'un polymère hydroxybenzène-lignine-aldéhyde soluble dans l'eau, susceptible d'être obtenu selon l'une quelconque des revendications 1 à 9, dans le traitement de la peau ou du cuir, de préférence dans un traitement de tannage ou de retannage.

11. Produit polyphénolique hydroxybenzène-lignine-aldéhyde soluble dans l'eau, susceptible d'être obtenu selon l'une quelconque des revendications 1 à 9, ayant une teneur en phénol libre inférieure à 20 ppm.

12. Procédé de traitement d'une peau ou d'un cuir comprenant l'étape de mise en contact de ladite peau ou dudit cuir avec un produit à base d'un produit polyphénolique hydroxybenzène-lignine-aldéhyde soluble dans l'eau, susceptible d'être obtenu selon l'une quelconque des revendications 1 à 9, pour au moins l'une parmi l'élévation de sa température de retrait, l'amélioration de sa souplesse, l'amélioration de sa plénitude, l'amélioration de son adhérence de la fleur.

13. Peau ou cuir, traité(e) par un produit polyphénolique hydroxybenzène-lignine-aldéhyde soluble dans l'eau, susceptible d'être obtenu selon l'une quelconque des revendications 1 à 9.

14. Produit, tel qu'une chaussure, un rembourrage de voiture, un rembourrage de meuble, un vêtement, un sac et autres accessoires, comprenant du cuir selon la revendication 13 ou du cuir traité selon le procédé de la revendication 12.
